# EUROPÄISCHE PATENTSCHRIFT

(11) **EP 3 367 043 B1**
(45) Veröffentlichungstag und Bekanntmachung des Hinweises auf die Patenterteilung: **23.06.2021**
(21) Anmeldenummer: 18158498.8
(22) Anmeldetag: 25.02.2018
(51) Int. Cl.: F41G 1/38

(54) **SCHUTZKAPPE**
PROTECTIVE CAP
CAPOT DE PROTECTION

(30) Priorität: 27.02.2017 DE 102017104083
(43) Veröffentlichungstag der Anmeldung: 29.08.2018
(73) Patentinhaber: Leica Camera AG, 35578 Wetzlar (DE)
(72) Erfinder: MÜLLER, Sven Roman, 35510 Butzbach (DE); KUCHLER, Marcus, 81675 München (DE)
(74) Vertreter: Stamer, Jan

(56) Entgegenhaltungen:
- WO-A1-95/29377
- WO-A1-2010/056702
- DE-U1- 8 800 656
- US-A- 4 909 617
- US-A1- 2008 186 584
- US-A1- 2010 095 577
- US-A1- 2014 360 082
- US-B1- 6 799 854

## Beschreibung

Die Erfindung betrifft eine Schutzkappe für zylindrisch gefasste optische Elemente, insbesondere Okulare oder Objektive an Fernrohren.

Es ist bekannt, Objektivfassungen frontseitig mit einem Innengewinde zu versehen, in das mit Bolzengewinde versehene Filter oder Blenden eingeschraubt werden können. Aus der DE 10 2006 036 890 B4 sind Zylinderringe bekannt, die eine drehsicher orientierte Aufnahme von Zubehörteilen erlauben.

Schutzkappen für Objektive sind ebenfalls in vielfältiger Ausgestaltung bekannt. Die Schutzkappen werden entweder direkt auf einen Objektivtubus aufgeschoben oder an einem auf den Objektivtubus aufgeschobenen Haltering gehalten.

Aus der Druckschrift US 4.909.617 A ist eine auf ein Kamera-Objektiv aufsetzbare Halterung bekannt, an die eine Schutzkappe vor das Objektiv drehbar angesetzt ist, wobei die Drehachse der Schutzkappe am Außenumfang der Halterung angesetzt ist.

Aus der Druckschrift WO 2010/056 702 A1 ist ein Adapter für ein Nachtsichtgerät bekannt. An dem Adapter ist schwenkbar eine Halterung für Blenden zur Erhöhung der Bildschärfe bekannt.

Aus der Druckschrift DE 88 00 656 U1 ist eine Schutzkappe für Fernrohre bekannt, die an einem am Fernrohrgehäuse befestigten Spannring in diskrete Stellungen schwenkbar befestigt ist.

Aus der Druckschrift US 2014/360.082 A1 ist eine schwenkbar an einem Hauptkörper befestigte Schutzkappe für Fernrohre bekannt. Der Hauptkörper ist auf das Fernrohr-Objektiv aufklemmbar. Der Hauptkörper und der Schutzdeckel sind aus flexiblem Material gefertigt.

Aus der Druckschrift US 2010/095.577 A1 ist eine an einem auf ein Fernrohr-Objektiv aufschiebbares Ringelement gegen die Kraft einer Torsionsfeder schwenkbar befestigte Schutzkappe bekannt.

Aus der DE 20 2015 102 076 U1 ist ein Haltering bekannt, der orientiert angebrachte Halteösen aufweist, in die ein Schutzdeckel mittels einer flexiblen Lasche eingesetzt werden kann. Die Orientierung der Halteöse ist z.B. so ausgerichtet, dass der Schutzdeckel nach einem Lösen von dem Objektiv an dem Haltering frei nach unten herunterhängt und den Durchblick durch das Objektiv nicht behindert. In die Objektivfassung kann der Schutzdeckel mittels einer unter Radialspannung durch eine Ringfeder stehenden Ringwulst ortsfest und zum Schutz gegen Umwelteinflüsse sicher eingesetzt werden.

Die Schutzdeckel werden üblicherweise aus einem flexiblen Kunststoff oder Gummi gefertigt.

Für die Anwendung an Fernrohren, insbesondere auf einem Gewehr montierten Zielfernrohren, ist ein nach unten herunterhängender Schutzdeckel hinderlich, weil er aufgrund der beweglichen Auflage auf dem Gewehr den Durchblick durch das Objektiv behindern kann oder den Abstand zwischen Okular und Auge des Benutzers einschränkt.

Schutzdeckel aus Kunststoff oder Gummi bergen bei Zielfernrohren auf Jagdwaffen die Gefahr, dass sie beim Tragen im Jagdrevier durch Äste beschädigt oder durchstoßen werden können, so dass die Frontlinse des Fernrohrobjektivs beschädigt werden kann.

Der Erfindung lag daher die Aufgabe zugrunde, einen an einem Haltering angebrachten Schutzdeckel so zu befestigen, dass er nach dem Lösen aus seiner Schutzfunktion in radial unterschiedliche, stabile, insbesondere stoßgesicherte, Ruhestellungen gebracht werden kann. Der Schutzdeckelsollte außerdem einen sicheren Schutz gegen Durchstoßen bieten.

Diese Aufgabe wird bei einer Schutzkappe der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

Erfindungsgemäß besteht die Schutzkappe aus zwei Ringelementen, von denen das äußere das innere formschlüssig überdeckt und auf diesem drehbar ist. Der innere Zylinderring wird zur Anwendung der Schutzkappe in die frontseitige Öffnung der zylindrischen Fassung eines optischen Elementes eingeschraubt. Das äußere Ringelement ist als Haltering mit einem Klapp-Scharnier zur Befestigung und Bewegung des Schutzdeckels aus einer Stellung zum Abdecken der des optischen Elementes in eine Offenstellung versehen.

Um die Schutzkappe in eine zylindrische Fassung eines optischen Elementes fest einschrauben zu können, ist zwischen dem äußeren Haltering und dem inneren Zylinderring eine Rastung vorhanden. Durch Lösen dieser Rastung kann der Haltering gegenüber dem Zylinderring in eine Orientierung gebracht werden, bei der das die Schutzkappe tragende Klapp-Scharnier die Schutzkappe bei Offenstellung in der gewünschten Ruhestellung hält.

Zum Einschrauben des Zylinderringes in die zylindrische Fassung eines optischen Elementes ist an dem Zylinderring ein Bolzengewinde vorgesehen, das beim Festsitzen in der zylindrischen Fassung die Drehbarkeit des Halteringes nicht behindern darf. Das wird vorzugsweise durch Begrenzung der Einschraubtiefe über die Anpassung zwischen der Länge des Bolzengewindes und der Gewindetiefe an der zylindrischen Fassung erreicht.

Zum Ausgleich von Toleranzen zwischen den beiden genannten Maßen kann es vorteilhaft sein, das Bolzengewinde im Fußbereich mit einer Hinterschneidung zu versehen, in die ein O-Ring als Quetschelement eingelegt werden kann, das einerseits einen festen Sitz im Einschraubgewinde ermöglicht und andererseits den Raum zwischen dem Rand der zylindrischen Fassung und dem Haltering nur soweit begrenzt, dass dessen Drehbarkeit nicht behindert wird.

Die Rastung zwischen dem Zylinderring und dem Haltering besteht aus einer am Außenumfang des Zylinderringes angebrachten Zahnung und einem Rastelement, das als Rastblock mit in die Zahnung kraft- oder formschlüssig eingreifenden Zahn-Elementen.

Vorzugsweise ist die Zahnung als Rechteck-Zahnung ausgebildet, die einen formschlüssigen Eingriff der ebenfalls rechteckig ausgebildeten Rast-Elemente des Rastblocks in die Zahnung am Zylinderring ermöglicht, so dass eine spielfreie Drehung der Schutzkappe beim Einschrauben in die zylindrische Fassung des zu schützenden optischen Elementes gewährleistet ist.

Die Rastung kann insbesondere manuell gelöst werden. Dazu ist vorzugsweise ein Betätigungselement am Klappscharnier vorhanden. Das Betätigungselement kann aus einem Stößel bestehen, der tangential zum Haltering gegen eine Federvorspannung verschiebbar ist und dabei die Zahn-Elemente des Rastblocks aus der Zahnung am Zylinderring heraushebt. Beim Loslassen des Betätigungselements springen die Zahn-Elemente des Rastblocks automatisch in die Zahnung am Zylinderring hinein und sichern die gewählte Drehstellung des Halteringes.

Alternativ kann anstelle der Stößel Anordnung auch ein Kipphebel zum Anheben des Rastblocks vorhanden sein.

Der Schutzdeckel ist um eine Drehachse am Klappscharnier schwenkbar. Diese Drehachse kann im vorderen Bereich der angesetzten Schutzkappe, d.h. oberhalb der Frontseite des Zylinder- und Halteringes oder etwas zurückgesetzt, d.h.in Richtung oberhalb des Bolzengewindes am Klappscharnier befestigt sein. Die gegenüber der Frontseite etwas zurückgesetzte Anordnung ermöglicht eine gefälligere Gestaltung der Gesamtanordnung und wegen der Winkelstellung der Drehachse zur Abdeckstellung eine bessere Sicherung gegen unbeabsichtigtes Wegklappen des Schutzdeckels.

Bei der Drehung des Schutzdeckels um die Drehachse wirkt diese vorzugsweise mit einer spannbaren Schenkelfeder zusammen. Diese unterstützt beim Verschließen der optischen Elemente die Abdeckstellung des Schutzdeckels. Andererseits kann in der Lagerung der Drehachse eine gewisse Friktion vorgesehen sein, die der Spannung der Schenkelfeder entgegenwirkt und den Schutzdeckel in beliebiger Schwenkstellung ruhen lässt.

Insbesondere bei der Anwendung der Schutzkappe zum Schutz der optischen Frontelemente von Zielfernrohren und des Auges der zielenden Person ist von besonderer Bedeutung, dass die Stellung des ausgeschwenkten Schutzdeckels auch beim Rückstoß an einem Gewehr unverändert bleibt. Dazu können vorteilhafterweise zumindest ein Magnet am Klappscharnier und/oder ein Magnet am Schutzdeckel so angeordnet sein, dass sie über ihre Magnetkraft die Schwenkstellung sichern. Vorzugsweise wird eine Schwenkstellung gewählt, bei der der Schutzdeckel in der Offenstellung parallel zur optischen Achse des zu schützenden optischen Elementes liegt.

Eine wesentliche Bedeutung kommt auch einer sicheren Abdeckstellung des Schutzdeckels zu. Dazu kann frontseitig in den Zylinderring oder den Haltering ein weiteres Ringelement eingesetzt sein, das entweder aus einem verformbaren Kunststoff, Gummi oder aus Metall bestehen kann. Das weitere Ringelement soll dabei gegenüber dem Zylinder- und/oder Haltering vorstehen und an seinem freiliegenden äußeren Umfang eine verformbare Wulst aufweisen. Diese kann entweder durch den Kunststoff des weiteren Ringes oder einen eingelegten O-Ring gebildet werden.

Der Schutzdeckel wird dabei zweckmäßigerweise mit einem topfförmigen Rand ausgebildet, in den innenliegend eine an den Wulst angepasste Nut eingefügt ist. Die Nuttiefe wird vorteilhaft vom Klappscharnier ausgehend abnehmend ausgeführt, wobei sie an der flachsten Stelle geringer als die Wulsthöhe ist. Beim Eingriff zwischen Nut und Wulst wird der topfförmige Rand des Schutzdeckels gegenüber seiner Drehachse verspannt und dadurch in der Abdeckstellung sicher gehalten.

Alternativ oder zusätzlich können am topfförmigen Rand des Schutzdeckels eine oder mehrere Klammern angeformt sein, die den Haltering umgreifen.

In der Zeichnung sind Ausführungsbeispiele der erfindungsgemäßen Schutzkappe schematisch dargestellt und werden nachfolgend anhand der Figuren näher beschrieben. Dabei zeigen:
- Fig.1: einen Querschnitt durch die Schutzkappe mit zurückliegender Drehachse,
- Fig.2: einen Querschnitt mit frontseitiger Drehachse,
- Fig.3: einen Querschnitt mit Rastung,
- Fig.4: eine perspektivische Ansicht der Rastung,
- Fig.5: eine Hebelwerk zur Betätigung der Rastung,
- Fig.6: die Anordnung eines Magneten im Klappscharnier und Deckel,
- Fig.7: die Anordnung von zwei Magneten im Klappscharnier,
- Fig.8: einen Querschnitt mit zusätzlichem Ringelement am Haltering und
- Fig.9: einen Schutzdeckel mit Klammern zum Umgreifen des Halteringes.

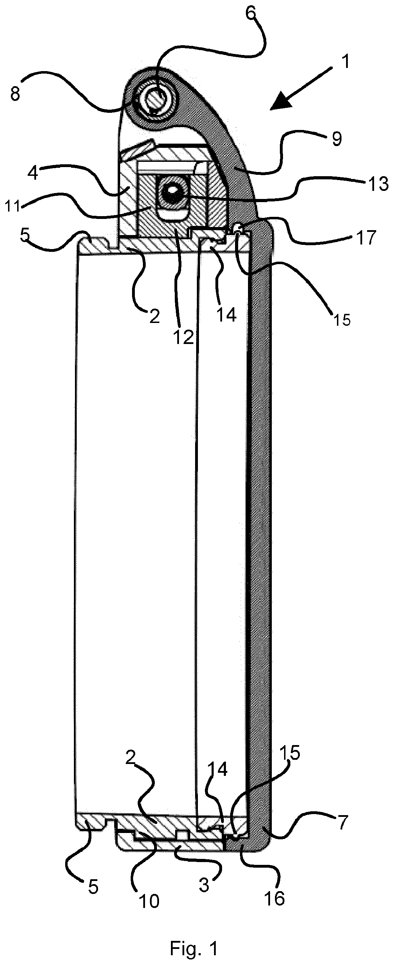

Die in Fig. 1 dargestellte Schutzkappe 1 enthält einen inneren Zylinderring 2 und einen darauf drehbar gelagerten Haltering 3. An dem Haltering 3 ist ein Klappscharnier 4 befestigt.

Der Zylinderring 2 enthält ein Bolzengewinde 5 zum Einschrauben in eine nicht dargestellte zylindrische Fassung eines zu schützenden optischen Elementes. Die Länge des Bolzengewindes 5 ist so gewählt, dass sie im Zusammenwirken mit dem Einschraubgewindes der Fassung des optischen Elementes die Drehbarkeit des Halteringes 3 nicht behindert.

Das Klappscharnier 4 enthält eine Drehachse 6, die im Ausführungsbeispiel gegenüber der Frontseite der Schutzkappe 1 mit dem Schutzdeckel 7 in Richtung des Bolzengewindes 5 zurückgelegt ist. Die Drehachse 6 wirkt in an sich bekannter Weise mit einer nicht weiter dargestellten spannbaren Schenkelfeder 8 zusammen.

Durch den von der Drehachse 6 zum Schutzdeckel 7 verlaufenden abgebogenen Hebelbereich 9 ergibt sich einerseits eine stabile Lage des Schutzdeckels 7 in der dargestellten Abdeckstellung und andererseits ein gefälligere Ansicht der Gesamtanordnung.

Innerhalb des Klappscharniers 4 ist eine Rastung angeordnet, die aus einer auf dem Außenumfang des Zylinderringes 2 vorhandenen Zahnung 10 und einem Rastblock 11 mit Zahn-Elementen 12 besteht. Der Eingriff der Zahn-Elemente 12 in die Zahnung 10 kann durch manuelle Betätigung eines Stößels 13 gelöst werden, um den Haltering 3 in eine gewünschte Drehstellung zum Zylinderring 2 bringen zu können.

In den Zylinderring 2 ist frontseitig ein Ringelement 14 eingeschraubt. Das Ringelement 14 steht gegenüber dem frontseitigen Ende des Zylinderringes 2 heraus und enthält in diesem Randbereich eine außen umlaufende Wulst 15. Der Schutzdeckel 7 ist mit einem topfförmigen Rand 16 versehen, in dem innenliegend eine Nut 17 eingearbeitet ist. Diese Nut 17 besitzt in dem zur Drehachse 6 weisenden oberen Bereich eine größere Tiefe auf als diametral gegenüberliegend im unteren Bereich, wobei die Nuttiefe an der flachsten Stelle geringer als die Wulsthöhe am Ringelement ist. In dem das zu schützende optische Element abdeckenden Zustand verklemmt sich daher der Schutzdeckel 7 im unteren Bereich zwischen Wulst 15 und Nut 17, so dass die Abdeckstellung gegen unbeabsichtigtes Öffnen gesichert ist. Der Klemmzustand kann durch schwungvolles Herabklappen des Schutzdeckels 7 oder durch manuellen Druck erreicht werden.

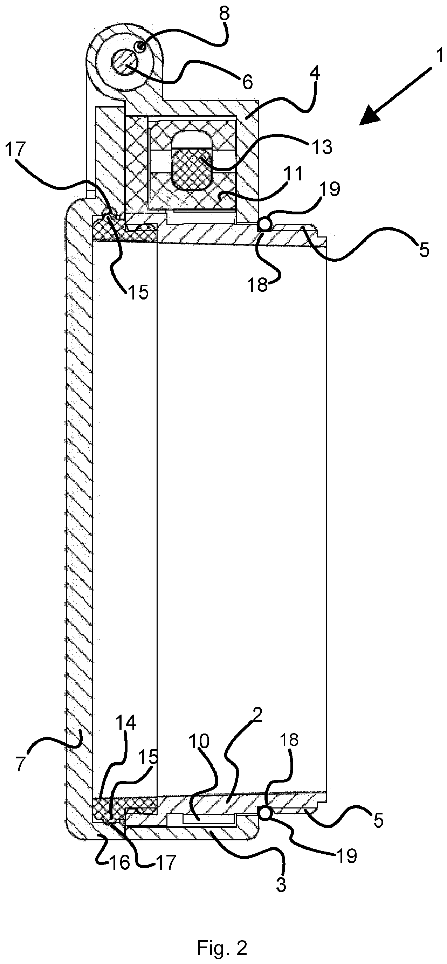

Fig. 2 zeigt ein gleiches Ausführungsbeispiel wie in Fig. 1, jedoch mit einer Drehachse 6 am Klappscharnier 4, die im Wesentlichen fluchtend zur Richtung des Schutzdeckels 7 im abdeckenden Zustand ausgerichtet ist. Der Bereich einer Hinterschneidung 18 am Bolzengewinde 5 ist hier mit einem O-Ring 19 ausgefüllt. Beim Einschrauben in die zylindrische Fassung eines zu schützenden optischen Elements schneidet sich diese in den O-Ring 19 ein oder quetscht ihn gegen einen Endbereich des Halteringes 3, ohne dessen Drehbarkeit zu beeinträchtigen. Durch die Einlage des O-Ringes 19 kann auch die aus Zylinderring 2 und Haltering 3 bestehende Anordnung gegen Auseinanderfallen gesichert sein.

Die innere Zylinderfläche des Zylinderringes 2 und des Ringelementes 14 sind leicht konisch nach außen hin ausgeführt, um den Öffnungswinkel des von der zu schützenden Optik aufzunehmenden Strahlenbündels nicht einzuengen.

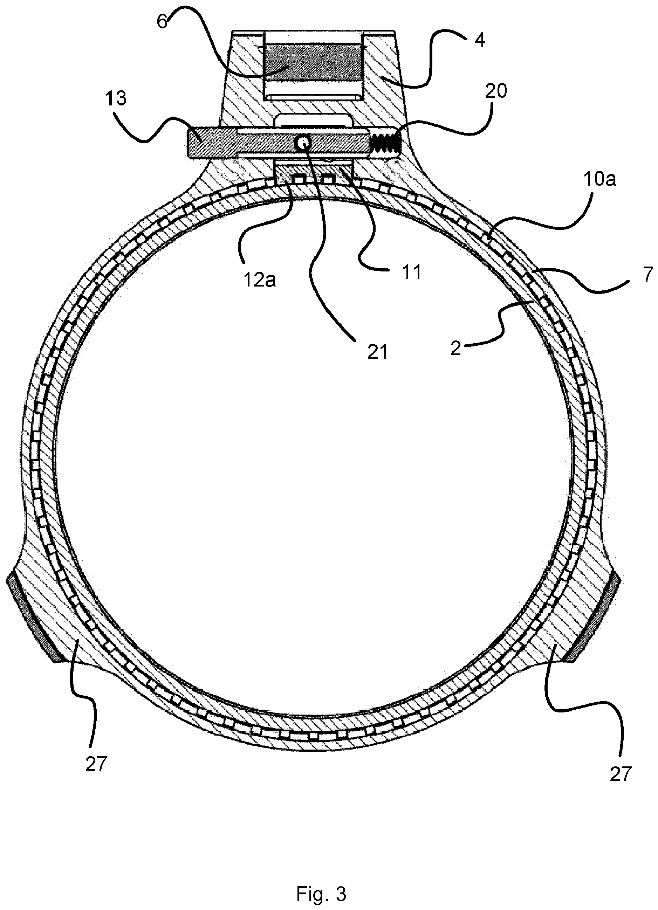

Fig. 3 zeigt im Querschnitt die Anordnung einer Rechteck-Zahnung 10a auf dem Außenumfang des Zylinderringes 2. In diese Zahnung 10a greifen die daran angepassten Zahn-Elemente 12a an einem Rastblock 11 ein und fixieren damit die Relativlage zwischen Klappscharnier 4 und Zylinderring 2.

Der Stößel 13 ist in dem Klappscharnier 4 tangential zum Zylinderring 2 verschiebbar gegen den Druck einer Feder 20 gelagert. Über eine Achse 21, die in einem hier nicht dargestellten schrägstehenden Schlitz geführt wird, hebt der Stößel 13 beim manuellen Eindrücken den Rastblock 11 an und die Zahn-Elemente 12a aus der Rechteck-Zahnung 10a heraus.

An dem Schutzdeckel 7 sind Laschen 27 angeformt, die zum manuellen Abheben und Andrücken des Schutzdeckels 7 genutzt werden können.

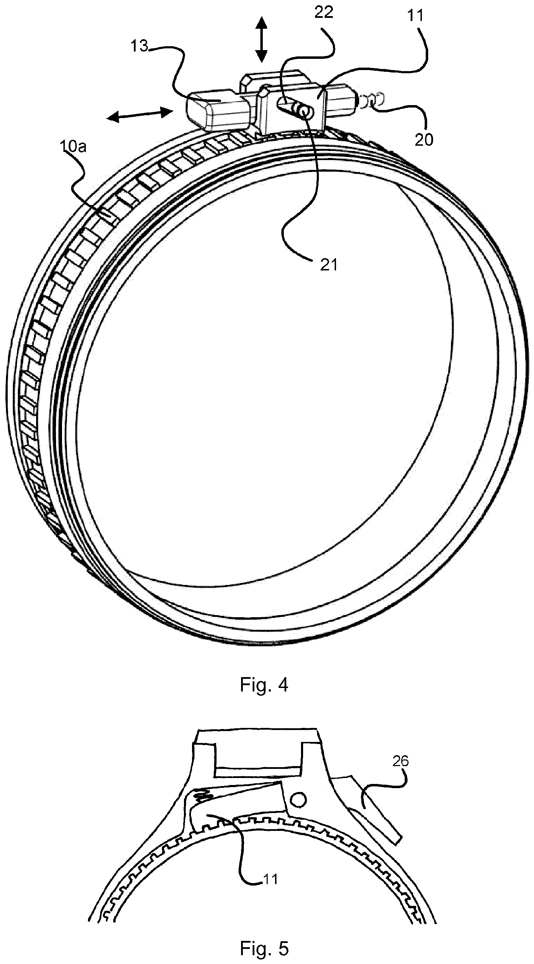

Fig. 4 zeigt im weiteren Detail die Funktion des Stößel-Mechanismus mit dem schräg stehenden Schlitz 22, in dem die Achse 21 am Stößel 13 geführt wird.

Fig. 5 zeigt ein Hebelwerk 26 mit Rastblock 11.

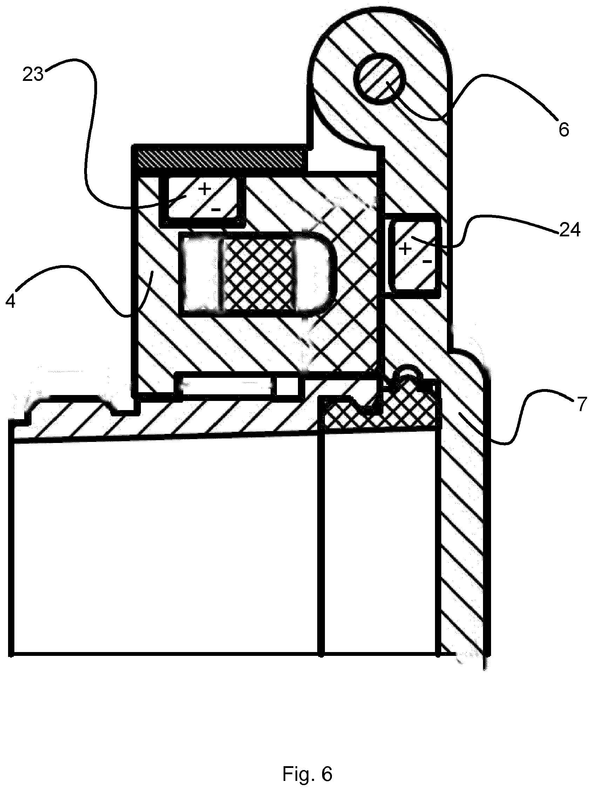

Fig. 6 zeigt als Detail die Anordnung eines Magneten 23, 24 sowohl im Klappscharnier 4 als auch im Schutzdeckel 7, die sich im aufgeklappten Zustand des Schutzdeckels 7 durch Magnetkraft anziehen.

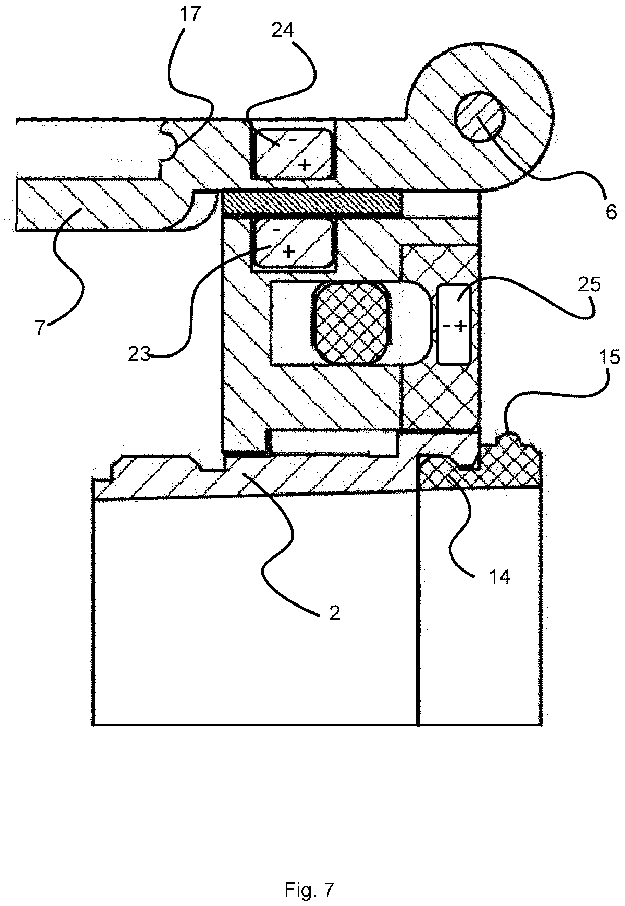

Fig. 7 zeigt dieselbe Anordnung, wobei im Klappscharnier 4 ein weiterer Magnet 25 angeordnet ist, der mit dem Magneten 24 im Schutzdeckel 7 in der Abdeckstellung zusammenwirkt. In der Offenstellung ist der Schutzdeckel 7 parallel zur optischen Achse der zu schützenden Optik ausgerichtet.

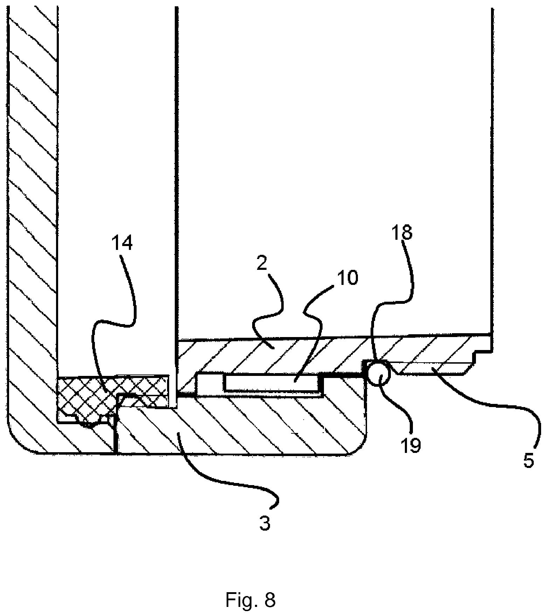

Fig. 8 zeigt eine alternative Ausführungsform, bei der das Ringelement 14 in den Haltering 3 eingeschraubt ist. Bei dieser Ausführungsform ist darauf zu achten, dass durch das Ringelement 14 die Drehbarkeit des Halteringes 3 auf dem Zylinderring 2 nicht behindert wird. Außerdem wird aus dieser Detail-Darstellung nochmals deutlich, dass der über das Bolzengewinde 5 und die Zahnung 10 hinweg aufgeschobene Haltering 3 durch die Einlage eines O-Ringes 19 in die Hinterschneidung 18 gegen ein Auseinanderfallen vordem Einschrauben in die zylindrische Fassung eine optischen Elementes gesichert wird.

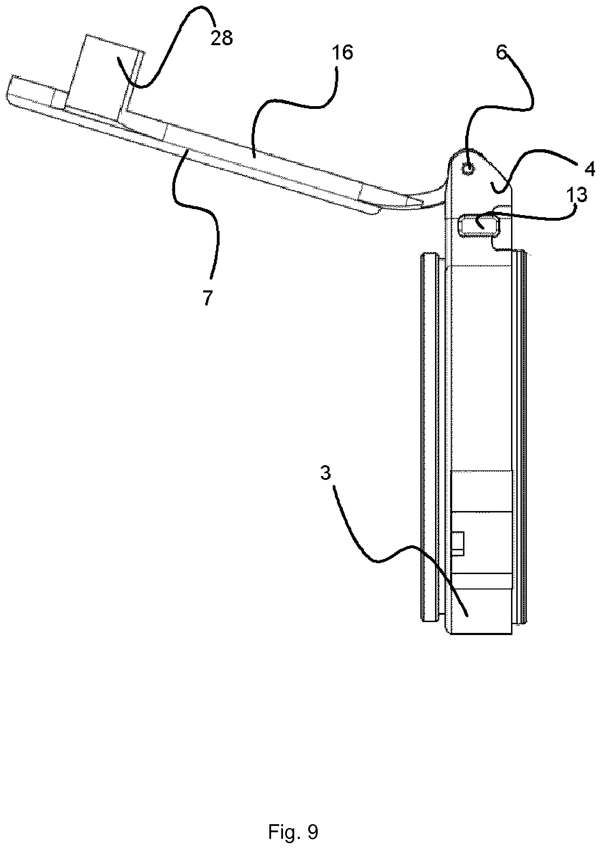

Fig. 9 zeigt die Anordnung einer Klammer 28 am topfförmigen Rand 16 des Schutzdeckels 7 als zusätzliche Sicherung für den Abdeckzustand des Schutzdeckels 7 am Haltering 3.

### Bezugszeichenliste

- 1: Schutzkappe
- 2: Zylinderring
- 3: Haltering
- 4: Klappscharnier
- 5: Bolzengewinde
- 6: Drehachse am Klappscharnier
- 7: Schutzdeckel
- 8: Schenkelfeder
- 9: Hebel Drehachse-Schutzdeckel
- 10: Zahnung an Zylinderring
- 10a: Rechteck-Zahnung
- 11: Rastblock
- 12: Zahn-Elemente
- 12a: Rechteck-Zahnelemente
- 13: Stößel
- 14: Ringelement
- 15: Wulst an Ringelement
- 16: topfförmiger Rand
- 17: Nut im topfförmigen Rand
- 18: Hinterschneidung Bolzengewinde
- 19: O-Ring am Bolzengewinde
- 20: Druckfeder am Stößel
- 21: Achse am Stößel
- 22: Schlitz im Rastblock
- 23,25: Magnet am Klappscharnier
- 24: Magnet am Schutzdeckel
- 26: Hebelwerk
- 27: Lasche am Schutzdeckel
- 28: Klammer am Schutzdeckel

## Patentansprüche

1. Schutzkappe (1) für zylindrisch gefasste optische Elemente, umfassend einen Haltering (3), der auf einen Zylinderring (2) drehbar aufgesetzt ist, wobei der
- Haltering (3) die Umfangsfläche des Zylinderringes (2) formschlüssig überdeckt,
- zwischen Zylinderring (2) und Haltering (3) eine Rastung (10,11,12) mit einem kraft- oder formschlüssig in die Rastung (10,11,12) eingreifenden Rast-Element (11,12) vorhanden ist,
**dadurch gekennzeichnet, dass**
- das Rast-Element (11,12) durch ein am Haltering (3) angebrachtes Betätigungs-Element (13;26) lösbar ist und
- an dem Haltering (3) ein Klapp-Scharnier (4) zur Befestigung und Bewegung eines Schutzdeckels (7) aus einer Abdeckstellung in eine räumlich feststehende Offenstellung vorhanden ist, wobei
- durch das in die Rastung (10, 11, 12) eingreifende Rast-Element (11, 12) die Drehstellung des Halteringes (3) relativ zum Zylinderring (2) und die Relativlage zwischen Klapp-Scharnier (4) und Zylinderring (2) fixiert werden und der Schutzdeckel (7) Teil der Schutzkappe (1) ist.

2. Schutzkappe (1) nach Anspruch 1, wobei der Zylinderring (2) ein Bolzengewinde (5) zum Einschrauben in die 20 zylindrische Fassung der optischen Elemente aufweist.

3. Schutzkappe (1) nach Anspruch 2, wobei die Länge des Bolzengewindes (5) an die Einschraubtiefe in der zylindrischen Fassung angepasst ist.

4. Schutzkappe (1) nach Anspruch 3, wobei das Bolzengewinde (5) im Fußbereich eine Hinterschneidung (18) zur Einlage eines die Drehbarkeit des Halteringes (3) nicht behindernden O-Ringes (19) aufweist.

5. Schutzkappe (1) nach einem der vorhergehenden Ansprüche, wobei die Rastung (10,11,12) aus einer am Außenumfang des Zylinderringes (2) angebrachten Zahnung (10,10a) und einem Rast-Element (11,12) besteht, das als Rastblock (11) mit in die Lücken der Zahnung (10,10a) kraft- oder formschlüssig eingreifenden Zahn-Elementen (12) ausgebildet ist.

6. Schutzkappe (1) nach Anspruch 5, wobei die Zahnung (10) und die Zahn-Elemente (12) als Rechteck-Zahnung (10a,12a) ausgebildet sind.

7. Schutzkappe (1) nach einem der vorhergehenden Ansprüche, wobei das Rast-Element (11,12) manuell betätigbar ist.

8. Schutzkappe (1) nach einem der vorhergehenden Ansprüche, wobei der Rastblock (11) und sein Betätigungs-Element (13) am Klapp-Scharnier (4) angeordnet sind.

9. Schutzkappe (1) nach einem der vorhergehenden Ansprüche, wobei der Rastblock (11) durch einen tangential zum Zylinderring (2) gegen eine Druckfeder (20) verschiebbaren Stößel (13) in radialer Richtung zum Zylinderring (2) aus der Zahnung (10,10a) heraushebbar ist.

10. Schutzkappe (1) nach einem der vorhergehenden Ansprüche, wobei der Rastblock (11) über ein unter Federvorspannung stehendes Hebelwerk (26) betätigbar ist.

11. Schutzkappe (1) nach einem der vorhergehenden Ansprüche, wobei das Klapp-Scharnier (4) eine über der Frontseite des Halteringes (3) angeordnete Drehachse (6) aufweist.

12. Schutzkappe (1) nach einem der Ansprüche 1 bis 10, wobei das Klapp-Scharnier (4) eine oberhalb des zum Bolzengewinde (5) weisenden Ende des Halteringes (3) angeordnete Drehachse (6) aufweist.

13. Schutzkappe (1) nach einem der vorhergehenden Ansprüche, wobei die Drehachse (6) mit einer beim Drehen des Klapp-Scharniers (4) spannbaren Schenkelfeder (8) zusammenwirkt ist.

14. Schutzkappe (1) nach einem der vorhergehenden Ansprüche, wobei das Klapp-Scharnier (4) mindestens einen mit einem im Schutzdeckel (7) angeordneten Magneten (24) zusammenwirkenden Magneten (23;25) zum stoßgesicherten Halten mindestens einer diskreten Klappstellung des Schutzdeckels (7) enthält.

15. Schutzkappe (1) nach einem der vorhergehenden Ansprüche, wobei in die frontseitige Öffnung des Zylinderrings (2) ein Ringelement (14) eingeschraubt ist, das aus verformbarem Kunststoff besteht und einen gegenüber dem Zylinderring (2) vorstehenden Rand mit einem nach außen weisenden umlaufenden Wulst (15) aufweist oder aus Metall besteht, wobei in den Rand ein O-Ring als verformbarer Wulst (15) eingelegt ist.

16. Schutzkappe (1) nach einem der Ansprüche 1 bis 14, wobei in die frontseitige Öffnung des Halterings (3) ein Ringelement (14) eingeschraubt ist, das aus verformbarem Kunststoff besteht und einen gegenüber dem Haltering (3) vorstehenden Rand mit einem nach außen weisenden umlaufenden Wulst (15) aufweist oder aus Metall besteht, wobei in den Rand ein O-Ring als verformbarer Wulst (15) eingelegt ist.

17. Schutzkappe (1) nach einem der vorhergehenden Ansprüche, wobei der Schutzdeckel (7) mit einem das Ringelement (14) übergreifenden topfförmigen Rand (16) ausgebildet ist, in den innenliegend eine an den Wulst (15) angepasste Nut (17) eingefügt ist.

18. Schutzkappe (1) nach Anspruch 17, wobei die Nuttiefe vom Bereich des Klapp-Scharniers (4) her bis zu einem diametral gegenüber liegenden Bereich abnehmend ausgeführt ist.

19. Schutzkappe (1) nach Anspruch 18, wobei die Nuttiefe an der flachsten Stelle geringer als die Wulsthöhe am Ringelement (14) ist.

20. Schutzkappe (1) nach einem der vorhergehenden Ansprüche, wobei an den topfförmigen Rand (16) des Schutzdeckels (7) mindestens eine den Haltering (3) übergreifende Klammer (28) angefügt ist.

## Claims

1. Protective cap (1) for cylindrically mounted optical elements, comprising
a retaining ring (3) which is placed rotatably onto a cylinder ring (2), the
- retaining ring (3) covering the circumferential surface of the cylinder ring (2) in a positively locking manner,
- there being a latching means (10, 11, 12) with a latching element (11, 12) which engages in a non-positive or positively locking manner into the latching means (10, 11, 12) between the cylinder ring (2) and the retaining ring (3),
**characterized in that**
- the latching element (11, 12) can be released by way of an actuating element (13; 26) which is attached to the retaining ring (3), and
- there is a folding hinge (4) on the retaining ring (3) for fastening and moving a protective cover (7) out of a covering position into a spatially fixed open position,
- the rotational position of the retaining ring (3) relative to the cylinder ring (2) and the relative position between the folding hinge (4) and the cylinder ring (2) being fixed by way of the latching element (11, 12) which engages into the latching means (10, 11, 12), and the protective cover (7) being part of the protective cap (1).

2. Protective cap (1) according to Claim 1,
the cylinder ring (2) having a bolt thread (5) for screwing into the cylindrical mount of the optical elements.

3. Protective cap (1) according to Claim 2,
the length of the bolt thread (5) being adapted to the screw-in-depth in the cylindrical mount.

4. Protective cap (1) according to Claim 3,
the bolt thread (5) having an undercut (18) in the base region for inserting an O-ring (19) which does not impede the rotating capability of the retaining ring (3) .

5. Protective cap (1) according to one of the preceding claims,
the latching means (10, 11, 12) consisting of a toothing system (10, 10a) which is applied to the outer circumference of the cylinder ring (2), and a latching element (11, 12) which is configured as a latching block (11) with tooth elements (12) which engage into the gaps of the toothing system (10, 10a) in a non-positive or positively locking manner.

6. Protective cap (1) according to Claim 5,
the toothing system (10) and the tooth elements (12) being configured as a rectangular toothing system (10a, 12a) .

7. Protective cap (1) according to one of the preceding claims,
it being possible for the latching element (11, 12) to be actuated manually.

8. Protective cap (1) according to one of the preceding claims,
the latching block (11) and its actuating element (13) being arranged on the folding hinge (4).

9. Protective cap (1) according to one of the preceding claims,
it being possible for the latching block (11) to be lifted out of the toothing system (10, 10a) in the radial direction with respect to the cylinder ring (2) by way of a tappet (13) which can be displaced tangentially with respect to the cylinder ring (2) counter to a compression spring (20).

10. Protective cap (1) according to one of the preceding claims,
it being possible for the latching block (11) to be actuated via a lever mechanism (26) which is under spring prestress.

11. Protective cap (1) according to one of the preceding claims,
the folding hinge (4) having a rotational axis (6) which is arranged above the front side of the retaining ring (3).

12. Protective cap (1) according to one of Claims 1 to 10,
the folding hinge (4) having a rotational axis (6) which is arranged above that end of the retaining ring (3) which points towards the bolt thread (5).

13. Protective cap (1) according to one of the preceding claims,
the rotational axis (6) interacting with a leg spring (8) which can be tensioned in the case of the rotation of the folding hinge (4).

14. Protective cap (1) according to one of the preceding claims,
the folding hinge (4) comprising at least one magnet (23; 25) which interacts with a magnet (24) which is arranged in the protective cover (7), for holding at least one discrete folding position of the protective cover (7) in a manner which is secured against shock.

15. Protective cap (1) according to one of the preceding claims,
a ring element (14) being screwed into the front-side opening of the cylinder ring (2), which ring element (14) consists of deformable plastic and has an edge which projects with respect to the cylinder ring (2) with an outwardly pointing circumferential bead (15) or consists of metal, an O-ring being inserted as deformable bead (15) into the edge.

16. Protective cap (1) according to one of Claims 1 to 14,
a ring element (14) being screwed into the front-side opening of the retaining ring (3), which ring element (14) consists of deformable plastic and has an edge which projects with respect to the retaining ring (3) with an outwardly pointing circumferential bead (15) or consists of metal, an O-ring being inserted as deformable bead (15) into the edge.

17. Protective cap (1) according to one of the preceding claims,
the protective cover (7) being configured with a pot-shaped edge (16) which engages over the ring element (14) and into which a groove (17) which is adapted to the bead (15) is inserted so as to lie on the inside.

18. Protective cap (1) according to Claim 17,
the groove depth being configured so as to decrease from the region of the folding hinge (4) as far as a diametrically opposite region.

19. Protective cap (1) according to Claim 18,
the groove depth at the flattest point being smaller than the bead height on the ring element (14).

20. Protective cap (1) according to one of the preceding claims,
at least one clip (28) which engages over the retaining ring (3) being joined to the pot-shaped edge (16) of the protective cover (7).

## Revendications

1. Cache de protection (1) pour éléments optiques montés de manière cylindrique, comportant une bague de maintien (3) qui est placée de manière rotative sur une bague cylindrique (2),
- la bague de maintien (3) recouvrant avec complémentarité de forme la surface périphérique de la bague cylindrique (2),
- un mécanisme d'encliquetage (10, 11, 12) doté d'un élément d'encliquetage (11, 12) venant en prise dans le mécanisme d'encliquetage (10, 11, 12) par force ou par complémentarité de forme étant présent entre la bague cylindrique (2) et la bague de maintien (3),
**caractérisé en ce que**
- l'élément d'encliquetage (11, 12) peut être libéré par un élément d'actionnement (13 ; 26) installé sur la bague de maintien (3) et
- une charnière rabattable (4) servant à la fixation et au déplacement d'un couvercle de protection (7) d'une position de recouvrement à une position ouverte fixe spatialement étant présente sur la bague de maintien (3),
- la position en rotation de la bague de maintien (3) relativement à la bague cylindrique (2) et la position relative entre la charnière rabattable (4) et la bague cylindrique (2) étant fixées par l'élément d'encliquetage (11, 12) venant en prise dans le mécanisme d'encliquetage (10, 11, 12) et le couvercle de protection (7) faisant partie du cache de protection (1) .

2. Cache de protection (1) selon la revendication 1, la bague cylindrique (2) comprenant un filetage extérieur (5) pour le vissage dans la monture cylindrique des éléments optiques.

3. Cache de protection (1) selon la revendication 2, la longueur du filetage extérieur (5) étant adaptée à la profondeur de vissage dans la monture cylindrique.

4. Cache de protection (1) selon la revendication 3, le filetage extérieur (5) comprenant dans la région de fond une contre-dépouille (18) pour l'insertion d'un joint torique (19) n'entravant pas la capacité de rotation de la bague de maintien (3).

5. Cache de protection (1) selon l'une des revendications précédentes,
le mécanisme d'encliquetage (10, 11, 12) étant constitué d'une denture (10, 10a) installée à la périphérie extérieure de la bague cylindrique (2) et d'un élément d'encliquetage (11, 12) qui est réalisé sous forme de bloc d'encliquetage (11) doté d'éléments formant dents (12) venant en prise par force ou par complémentarité de forme dans les entredents de la denture (10, 10a).

6. Cache de protection (1) selon la revendication 5,
la denture (10) et les éléments formant dents (12) étant réalisés sous forme de denture rectangulaire (10a, 12a) .

7. Cache de protection (1) selon l'une des revendications précédentes,
l'élément d'encliquetage (11, 12) pouvant être actionné manuellement.

8. Cache de protection (1) selon l'une des revendications précédentes,
le bloc d'encliquetage (11) et son élément d'actionnement (13) étant disposés sur la charnière rabattable (4).

9. Cache de protection (1) selon l'une des revendications précédentes,
le bloc d'encliquetage (11) pouvant être soulevé hors de la denture (10, 10a) dans la direction radiale par rapport à la bague cylindrique (2) par un poussoir (13) déplaçable tangentiellement par rapport à la bague cylindrique (2) à l'encontre d'un ressort de compression (20).

10. Cache de protection (1) selon l'une des revendications précédentes,
le bloc d'encliquetage (11) pouvant être actionné par le biais d'un mécanisme à levier (26) sous précontrainte de ressort.

11. Cache de protection (1) selon l'une des revendications précédentes,
la charnière rabattable (4) comprenant un axe de rotation (6) disposé au-dessus du côté frontal de la bague de maintien (3).

12. Cache de protection (1) selon l'une des revendications 1 à 10,
la charnière rabattable (4) comprenant un axe de rotation (6) disposé au-dessus de l'extrémité, tournée vers le filetage extérieur (5), de la bague de maintien (3) .

13. Cache de protection (1) selon l'une des revendications précédentes,
l'axe de rotation (6) coopérant avec un ressort à branches (8) pouvant être tendu lors de la rotation de la charnière rabattable (4).

14. Cache de protection (1) selon l'une des revendications précédentes,
la charnière rabattable (4) contenant au moins un aimant (23 ; 25) coopérant avec un aimant (24) disposé dans le couvercle de protection (7) pour maintenir de manière protégée contre les chocs au moins une position de rabattement distincte du couvercle de protection (7).

15. Cache de protection (1) selon l'une des revendications précédentes,
un élément annulaire (14) étant vissé dans l'ouverture côté frontal de la bague cylindrique (2), lequel est constitué de matière synthétique déformable et comprend un bord faisant saillie par rapport à la bague cylindrique (2) et doté d'un bourrelet (15) périphérique orienté vers l'extérieur ou est constitué de métal, un joint torique étant inséré en tant que bourrelet déformable (15) dans le bord.

16. Cage de protection (1) selon l'une des revendications 1 à 14,
un élément annulaire (14) étant vissé dans l'ouverture côté frontal de la bague de maintien (3), lequel est constitué de matière synthétique déformable et comprend un bord faisant saillie par rapport à la bague de maintien (3) et doté d'un bourrelet (15) périphérique orienté vers l'extérieur ou est constitué de métal, un joint torique étant inséré en tant que bourrelet déformable (15) dans le bord.

17. Cache de protection (1) selon l'une des revendications précédentes,
le couvercle de protection (7) étant réalisé de manière à présenter un bord (16) en forme de pot venant en prise par le dessus avec l'élément annulaire (14), bord dans l'intérieur duquel est incorporée une rainure (17) adaptée au bourrelet (15).

18. Cache de protection (1) selon la revendication 17, la profondeur de rainure étant configurée de manière décroissante de la région de la charnière rabattable (4) à une région diamétralement opposée.

19. Cache de protection (1) selon la revendication 18, la profondeur de rainure au point le moins profond étant inférieure à la hauteur de bourrelet sur l'élément annulaire (14).

20. Cache de protection (1) selon l'une des revendications précédentes,
au moins une attache (28) venant en prise par le dessus avec la bague de maintien (3) étant fixée au bord (16) en forme de pot du couvercle de protection (7).
